(19) Europäisches Patentamt
European Patent Office
Office européen des brevets

(11) **EP 1 888 196 B1**

(12) **EUROPÄISCHE PATENTSCHRIFT**

(45) Veröffentlichungstag und Bekanntmachung des Hinweises auf die Patenterteilung:
**11.05.2011 Patentblatt 2011/19**

(21) Anmeldenummer: 06753726.6

(22) Anmeldetag: **18.05.2006**

(51) Int Cl.:
**B01D 15/08** (2006.01)     **G01N 30/60** (2006.01)
**G01N 30/02** (2006.01)     **B01J 47/00** (2006.01)
**B01D 57/02** (2006.01)     **G01N 27/00** (2006.01)

(86) Internationale Anmeldenummer:
**PCT/EP2006/004744**

(87) Internationale Veröffentlichungsnummer:
**WO 2006/125564 (30.11.2006 Gazette 2006/48)**

(54) **ELEMENTE ZUR TRENNUNG VON SUBSTANZEN DURCH VERTEILUNG ZWISCHEN EINER STATIONÄREN UND EINER MOBILEN PHASE UND VERFAHREN ZUR HERSTELLUNG EINER TRENNVORRICHTUNG**

ELEMENTS FOR SEPARATING SUBSTANCES BY DISTRIBUTING BETWEEN A STATIONARY AND A MOBILE PHASE, AND METHOD FOR THE PRODUCTION OF A SEPARATING DEVICE

ELEMENTS POUR SEPARER DES SUBSTANCES PAR DISTRIBUTION ENTRE UNE PHASE STATIONNAIRE ET UNE PHASE MOBILE ET PROCEDE DE PRODUCTION D'UN DISPOSITIF DE SEPARATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **23.05.2005 DE 102005024154**

(43) Veröffentlichungstag der Anmeldung:
**20.02.2008 Patentblatt 2008/08**

(73) Patentinhaber: **Bischoff Analysentechnik und -Geräte GmbH**
**71229 Leonberg (DE)**

(72) Erfinder:
• **BISCHOFF, Klaus**
  **71229 Leonberg (DE)**
• **NYIREDY, Sz**
  **Lupaszigeti St.4**
  **H-2011 Budakalasz (HU)**
• **SZÜCS, Zoltan**
  **Lupaszigeti St.4**
  **H-2011 Budakalasz (HU)**

(74) Vertreter: **Mammel, Ulrike et al**
**Mammel & Maser**
**Patentanwälte**
**Tilsiter Strasse 3**
**71065 Sindelfingen (DE)**

(56) Entgegenhaltungen:
DE-A1- 3 836 343       DE-B- 1 130 204
US-A1- 2003 010 716

• **PATENT ABSTRACTS OF JAPAN Bd. 1997, Nr. 07, 31. Juli 1997 (1997-07-31) & JP 09 072890 A (JEOL LTD), 18. März 1997 (1997-03-18)**

## Beschreibung

Die vorliegende Erfindung betrifft Elemente zur Trennung von Substanzen durch Verteilung zwischen einer stationären und einer mobilen Phase, insbesondere für die Chromatographie, sowie ein Verfahren zur Herstellung der die stationäre Phase umfassenden Trennvorrichtung, insbesondere einer chromatographischen Säule.

Chromatographie ist ein physikalisch-chemisches Trennverfahren, bei dem die zu trennenden Substanzen zwischen zwei Phasen verteilt werden, von denen eine, die stationäre Phase, festliegt, während die andere, mobile Phase sich in eine bestimmte Richtung bewegt.

Die stationäre Phase ist eine der beiden Phasen, aus denen das chromatographische System besteht. Als stationäre Phase kann eine feste Phase (Sorbens), eine flüssige Phase (Trennflüssigkeit) oder ein Gel eingesetzt werden. Im Falle der flüssigen Phase ist diese auf einem Festkörper (Träger) aufgezogen, der auch am Trennprozess mitbeteiligt sein kann. Bei einer gebundenen Phase ist die trennwirksame Schicht chemisch an einen Träger oder an die Innenseite einer Kapillare gebunden.

Die stationären Phasen im Rahmen der vorliegenden Erfindung schließen auch die quasistationären Phasen bei der Liquid-Liquid-chromatographie mit ein.

Um bei einer chromatographischen Trennung die Trennsäule gegen Verunreinigungen zu schützen, wird der Trennsäule teilweise eine Vorsäule vorgeschaltet. Die Vorsäule ist im Allgemeinen mit derselben stationären Phase wie die Trennsäule gefüllt, oder es wird ein Material mit einer geringeren Retention verwendet.

Bei der isokratischen Analyse bleibt die Zusammensetzung der mobilen Phase während des gesamten Etutionsvorgangs konstant.

Im Gegensatz dazu wird bei der Gradientenelution die Zusammensetzung der mobilen Phase kontinuierlich oder auch stufenweise (Stufengradient) geändert.

In der Praxis werden Substanzen unterschiedlicher Polaritäten chromatographisch über einen weiten Polaritätsbereich häufig mittels. Gradientenelution getrennt, da hierdurch eine selektive Trennung erreicht werden kann. Hierbei wird zu einer anfänglich zumeist unpolaren mobilen Phase kontinuierlich oder stufenförmig eine polarere mobile Phase zugemischt (Normalphasenchromatographie) oder einer polareren mobilen Phase wird eine weniger polare zugemischt (Umkehrphasenchromatographie oder Reversed Phase Chromatographie).

Zur Bildung der mobilen Phase mittels Gradient sind Chromatographen für die Gradientenelution mit wenigstens zwei Pumpen für die verschiedenen Lösemittel oder zumindest ein Niederdruckmischer sowie Software zur Kontrolle notwendig. Die Robustheit der Gradienttrennung ist immer schlechter als die bei isokratischen Trennungen.

Ein weiterer Nachteil der Gradientenelution besteht darin, dass nach einer Elution mit z.B. einem zunehmend polareren Lösemittelgemisch das chromatographische System in Bezug auf die bei der nächsten Elution anfänglich unpolare mobile Phase wieder in das thermodynamische Ausgangsgleichgewicht gebracht werden muss, und zwar durch umfangreiches Spülen mit der in diesem Beispiel unpolaren Phase, bevor die Säule für die nächste Gradientenelution verwendet werden kann. Das Rückspülen erfolgt im Allgemeinen mit dem Fünfzehn- bis Zwanzigfachen des Säulenvolumens und führt zu einer Verlängerung der gesamten Zykluszeit und einem erheblichen Verbrauch von Lösemitteln.

Der Trennung gerade einer großen Anzahl von zu überprüfender und zu trennender Proben durch Gradientenelution, beispielsweise bei der Qualitätskontrolle, steht somit nachteilig die verlängerte gesamte Zykluszeit gegenüber, wobei gerade für Routineuntersuchungen einer Vielzahl von Proben die Zeit pro Analyse bei guter Trennung aus wirtschaftlichen Gründen selbstverständlich so gering wie möglich sein sollte.

Ein weiterer Nachteil der Gradtentenetution besteht darin, dass die sich hierbei ändernde Zusammensetzung der mobilen Phase den Einsatz bestimmter Detektionsprinzipien nicht zulässt. So scheidet z.B. der Einsatz von Detektoren, die auf der Messung des Brechungsindexes beruhen, bei einer sich ändernden Zusammensetzung der mobilen Phase prinzipiell aus.

Selbst die meisten benutzten UV/VIS Detektoren werden in der Gradienenelution durch eine Vielzahl von zugemischten Lösemittel und Additiven wie z.B. Methanol, THF, TFA, Ameisensäure, Essigsäure etc., die im unteren UV-Bereich < 230 nm selbst stark absorbieren, in ihrem Einsatzbereich erheblich eingeschränkt.

Auch bei den in jüngster Zeit als universelle Detektoren eingesetzten Massenspektrometem treten bei der Gradientenelution Sekundäreffekte wie z.B. Probleme der Ionisierung in unterschiedlicher chemischer Umgebung auf, wodurch die quantitative Analyse erheblich erschwert wird.

Nicht zuletzt stehen der Trennung der Substanzen mittels Gradientenelution auch ökologische Nachteile gegenüber: die nach einer Elution als Gemisch anfallende mobile Phase ist nicht oder nur schwer wiederzuverwerten, so dass das Lösemittelgemisch kostenpflichtig entsorgt werden muss und zudem noch Kosten für die Bereitstellung der (neuen) Lösemittel für die Bildung des Gradienten anfallen. Ferner müssen bei der Gradientelution wesentlich teurere und reinere Lösemittel verwendet werden als im isokratischen Fall.

Darüber hinaus fallen nicht unerhebliche Lösemittelmengen durch das Rückspülen der Trennsäule an, die nicht wieder verwertbar sind.

Wenn der Anwender in der Praxis auch im Rahmen von Vorversuchen zurächst aus Säulen mit verschiedenen stationären Phasen die Säule mit der am besten geeigneten stationären Phase entwickelt (solche Säulen werden als Versuchssäulen angeboten), erfolgt die Optimierung der Trennmethode in der Praxis letztendlich durch Optimierung der mobilen Phase, nämlich durch die Auswahl der Art der Lösemittel, des pH-Werts der mobilen Phase, durch weitere Zusätze etc., die dann zu der verbesserten Trennung führen.

Einfacher ist es jedoch, bestimmte Selektivitäten über die geschickte Auswahl der richtigen stationären Phase zu erreichen. Häufig tritt hierbei jedoch die Situation auf, dass - sobald eine Trennung zwischen einem bestimmten kritischen Peakpaar gelingt - an einer anderen Stelle des Chromatogramms ein anderes Peakpaar zu einem Peak zusammenfällt.

Um dies zu verhindern wurde vorgeschlagen, als stationäre Phase ein Gemisch geeigneter stationärer Phasen (Mischbett) einzusetzen, wodurch für ein spezifisches Trennproblem bei isokratischer Analyse häufig eine selektive Trennung erreicht werden kann.

Von G.J. Eppert und P. Heitmann wurde In LC.GC Europe, S. 2, Oktober 2003 eine Optimierung von Mischbettsiulert vorgeschlagen, die darauf beruht, zunächst anhand von drei oder vier Testsäulen unterschiedlicher Selektivität die Retentionszeiten eines zu untersuchenden Substanzgemischs zu bestimmen und anschließend dann eine für das spezifische Trennproblem geeignete Mischbettsäule zu berechnen.

Nachteilig bei diesen stationären Phasen als Mischbett ist jedoch, dass der Hersteller der Säulen bei jedem neuen Trennproblem mit dem Packen einer entsprechenden Mischbett-Säule beauftragt werden muss. Kurzfristig hat der Anwender somit keine Möglichkeit, mit der gewünschten Selektivität eine isokratische Analyse vorzunehmen. Ein Packen der Säule durch den Anwender ist nicht möglich, da die hierfür erforderlichen Geräte beim Anwender nicht vorhanden sind und das diesbezügliche Know-how fehlt. Ferner ist es auch relativ schwierig, ein Mischbett reproduzierbar gut In eine Trennsäule zu packen.

Aus der multidimensionalen Chromatographie ist bekannt, von einer Hauptsäule abzweigende, zeitabhängig ankoppelbare Säulen vorzusehen, wobei einzelne Fraktionen von der Hauptsäule an einem bestimmten Zeitpunkt über die dann temporär angekoppelte Säule "abgezweigt" werden. Letztendlich erfolg die Trennung des Gemisches bei der multidimensionalen Chromatographie nur zu einem gewissen Anteil an der stationären Phase der Trennvorrichtung, und die wesentliche Trennung wird durch Schalten In eine zusätzliche Trennvorrichtung mit einer zusätzlichen Eluentenförderung erreicht.

Wenn mit der multidimensionalen Chromatographie auch gute Trennungen erzielt werden können, so ist diese doch sehr aufwändig, störanfällig und für Routinemessungen nur unter sehr großem Kostenaufwand geeignet.

Zur Lösung spezieller Trennprobleme wie der Trennung eines 20 Komponenten umfassenden Aminosäuren-Gemischs wurde von J. L Glajch et al. in "journal of Chromatography", 318 (1985), Seite 23 vorgeschlagen, die Selektivität dadurch zu verbessern, dass neben vier mobilen Phasen auch stationäre Phasen kombiniert werden. Jedoch erfolgte dieser Ansatz aus rein empirischen Versuchen heraus und ist daher nicht gezielt berechnet.

Zur Optimlerung der mobilen Phase bei der Flüssigkeitschromatographie wurde von Sz. Nyiredy, B. Meier, C. A. J. Erdelmeler, O. Sticher in "High Resolution Chromatogr. & Chromatogr. Communications" 8, (1985) das sogenannte "Prisma"-Modell vorgeschlagen. Hierbei wird die Lösemittelstärke vertikal und die zweidimensionale Darstellung der Anteile der Komponenten, die hauptsächlich die Selektivität beeinflussen, in einer horizontalen Ebene aufgetragen.

Später wurde in der Säulenflüssigkeitschromatographie aus fünfzehn einzelnen Messungen das gesamte Optimum der mobilen Phase und aus zwölf einzelnen Messungen das lokale Optimum der mobilen Phase vorausgesagt (Sz. Nyiredy, W. Wosniok, H. Thiele, O. Sticher "Fluid Chromatogr." 14, 3077 (1991)).

Ebenfalls wurde dieses Modell auch auf die Optimierung der Extraktionsmittel in der flüssig-flüssig-Extraktion angewandt, wobei hier optimierte Extraktionsmittel aus zwölf Messwerten ermittelt werden konnten (Sz. Nyiredy "Chromatographia" 51, 288 (2000)).

Aus der US 2003/0010716 A1 ist ein System und ein Verfahren zur Durchführung von Trennungen unter Verwendung einer Simulated-Moving-Bed-Apparatur bekannt. Bei diesen Apparaturen werden aus mehreren Zonen bestehende SMB-Systeme miteinander kombiniert.

Aus der DE 1 130 204 ist eine Trennvorrichtung für die Gaschromatographie bekannt, die aus mehreren gegeneinander absperrbaren Teilen zusammengesetzt ist.

Aus der DE 38 36 343 A1 ist eine Säule bekannt, bei der mechanisch trennbare Rohrsysteme gekoppelt und anschließend befüllt werden.

Aus dem japanischen Abstract JP 09092890 sind Säulenelemente bekannt, die aneinander gekoppelt werden, wobei sich zwischen den Anschlussstücken jeweils Filter und O-Ringe befinden.

Aus dem US-Patent Nr. 2,985,589 sind Säulensegmente bekannt, die am oberen und unteren Ende voneinander unterschiedliche Kopplungsmittel aufweisen.

Der vorliegenden Erfindung liegt die Aufgabe zugrunde, eine Vorrichtung und ein Verfahren anzugeben, mit der ein chromatographisches Trennproblem bei optimaler Selektivität und Detektierbarkeit schnell, effizient und umweltfreundlich gelöst werden kann.

Diese Aufgabe wird durch die Merkmale der Ansprüche 1, 14 und 23 gelöst.

Es wird ein Set von verschiedenen Trennelementen gemäß Anspruch 14 bereitgestellt.

Die Kopplung erfolgt dabei durch Kopplung der Trennelemente als solche, insbesondere Kopplung der Trägerelemente, die zusammen mit der jeweiligen stationären Phase das Trennelement bilden. Beispielsweise kann eine Kopplung von Säulensegmenten dadurch erfolgen, dass die Säulensegmente an ihren jeweiligen Rohrenden aneinandergekoppelt werden.

Ebenfalls ist eine Kopplung der Trennelemente über zusätzliche Kopplungs- oder Verbindungsstücke möglich.

Im Rahmen der vorliegenden Erfindung sind zwei stationäre Phasen $S_A$ und $S_B$ dann verschieden, wenn sie sich voneinander durch ihre Selektivität unterscheiden.

Das Minimalset besteht somit aus jeweils drei Trennelementen bzw. Säulensegmenten $S_A$ und jeweils drei Trennelementen bzw. Säulensegmenten $S_B$, wobei A und B stationäre Phasen unterschiedlicher Selektivität sind.

Bevorzugt besteht ein Set aus wenigstens drei unterschiedlichen stationäre Phasen $S_A$, $S_B$ und $S_C$ umfassenden Trennelementen oder Säulensegmenten, wobei von jedem dieser Arten von Trennelementen in dem Set 3, vorzugsweise wenigstens 5, bevorzugt wenigstens 7 und besonders bevorzugt jeweils 10 oder mehr Stück enthalten sind.

Die jeweiligen stationären Phasen sollten so ausgewählt werden, dass sie unterschiedliche physiochemische Eigenschaften besitzen.

Ein solches Set kann beispielsweise Trennelemente mit stationären Phasen, die gesättigte oder ungesättigte Alkylgruppen (C1, C2, C3, C4, C6, C8, C12, C14, C16, C18, C22, C27, C30), die mono-, poly- oder acyclisch, ali- oder heterocyclisch sein können, Nitro-, Cyano-, Carbonyl-, Carboxyl-, Hydroxyl-, Diol-, oder Thiolgruppen, Glycidoxy-Gruppen, ggf. verethert, Amino- oder chiralen Gruppen, Amidgruppen, Carbamate, Harnstoff, Perfluoralkylgruppen oder Perfluorarylgruppen und andere Halogenalkyl- und Halogenarylgruppen, Polybutadiengruppen oder andere organische Polymere, affinitätschromatagraphischen Modifizierungen oder ionenaustauschfähige Gruppen (Kationenaustauscher, Anionenaustauscher, Zwitterionen), nichtmodifizierte Tägermaterialien (z.B. Kieselgel), molekular geprägte Polymere (MIPs) oder deren Kombinationen z.B. multifunktionelle stationäre Phasen umfassen, enthalten, ggf. zusätzlich oder anstelle der zuvor genannten drei verschiedenen Arten von Trennelementen.

Im Gegensatz zu der multidimensionalen Chromatographie erfolgt die Trennung der Substanzen an der aufgrund der Optimierung gekoppelten oder verbundenen Trennvorrichtung bzw. Säule, d.h. die Komponenten des Gemisches durchqueren die gesamte Trennvorrichtung. Die miteinander gekoppelten Trennelemente bleiben wenigstens für eine gesamte Trennung miteinander verbunden, eine während des Trennvorgangs erfolgende An- oder Abkopplung, die von der multidimensionalen Chromatographie bekannt ist, erfolgt nicht.

Wesentlich ist weiterhin, dass das Verhältnis der stationären Phasen der aneinandergekoppelten Trennvorrichtung zueinander veränderbar ist, denn die Trennvorrichtung kann wiederum in die einzelnen Trennelemente zerlegt und aus diesen eine Trennvorrichtung mit einem anderen Verhältnis der stationären Phasen zueinander und mit einer anderen Selektivität aufgebaut werden.

Im Gegensatz zu den bekannten Mischbettsäulen erfolgt der Aufbau der gewünschten Säule erfindungsgemäß durch mechanische Kupplung einzelner einsatzbereiter Trennelemente, und zwar im Allgemeinen dadurch, dass die Trägerelemente (z.B. Rohrstücke als Säulensegmente) miteinander gekoppelt werden. Hierdurch werden die weiterhin in den Trennelementen unverändert vorliegenden stationären Phasen nicht verändert, insbesondere nicht miteinander vermischt.

Im Gegensatz zur Herstellung vorausberechneter Mischbettsäulen, bei denen letztendlich der Säulennersteller eine den spezifischen Kundenwünschen entsprechende Säule packt, das heißt, eine spezielle stationäre Phase herstellen und mischen muss, kann erfindungsgemäß der Benutzer vor Ort durch einfaches mechanisches Koppeln der erforderlichen Säulensegmente die gewünschte Trennvorrichtung herstellen.

Die Erfindung betrifft auch ein Verfahren zur Herstellung einer optimierten Vorrichtung zur Trennung von Substanzgemischen.

Zunächst wird mit jeder der wenigstens zwei Arten von stationären Phasen $S_i$ ($i \geq 2$) eine Basismessung des zu trennenden Gemischs in einer festzulegenden mobilen Phase durchgeführt und der betreffende Retentionsfaktor k einer jeden Komponente mit

$$k = (t_R - t_M)/(t_M - t_M^{Ec}) \qquad\qquad (1)$$

bestimmt ($t_R$: Retentionszeit, $t_m$: Durchflusszeit, $t_m^{Ec}$: Extracolumn-Volume-correction). Die Extra-Column-Volume-correction berücksichtigt den zeitlichen Beitrag durch das Volumen der Zuleitungen, des Injektors und der Detektorzelle. Es empfiehlt sich, die mobile Phase so festzulegen, dass die K-Werte zwischen der zuerst und der zuletzt zu eluierenden Substanzen im Bereich von 1 bis 20 liegen.

Die Basismessung sollte vorzugsweise an einer jeden Art von Trenneiement (z.B. $S_A$, $S_b$, $S_c$) oder an mehreren gleichartigen oder verschiedenen zusammengekoppelten Elementen (d.h. z.B. 10 gekoppelte Elemente $S_A$ oder 5 $S_A$, 3 $S_B$, 2 $S_C$ 3 $S_A$, 5 $S_B$, 2 $S_C$ und 2 $S_A$, 3 $S_B$; 5 $S_B$) erfolgen Auch kann die Basismessung an einer gesonderten Basismessungssäule durchgeführt werden.

Aus den bestimmten k-Werten einer jeden zu trennenden Komponente und einer jeden Art von Trennelementen mit der stationären Phase $S_1$ wird anschließend die optimierte Kombination von Trennelementen und deren Dimension für das spezifische Trennproblem berechnet und die optimierte Trennvorrichtung dann in der vorausberechneten Weise aus den Trennelementen der vorbestimmten Dimension gekoppelt.

Unter der Dimension eines Trennelements wird das Volumen der jeweiligen stationären Phase in dem Trennelement verstanden. Bei Trennelementen mit einem konstanten Durchmesser ist die Dimension der Länge proportional. Weisen alle Trennelementen denselben Durchmesser und dieselbe Länge auf, ist die Dimension der Anzahl N der zu koppelnden Trennelemente proportional.

Die Berechnung der für das spezifische Trennprobtem am meisten geeigneten Kombination der Trennelemente erfolgt vorteilhafterweise das Prisma-Modell. Hierbei wird - vorzugsweise unter Vorgabe einer vorbestimmten Anzahl N von zu koppelnden Trennelementen - für eine jegliche mögliche Kombination von stationären Phasen und deren Dimension, insbesondere Anzahl von Trennelementen einer vorbestimmter Gesamtanzahl N = X + Y + Z von Trennelementen, aufgrund der mit der Basismessung bestimmten Retenfiionsfaictoren $k_i$ der jeweilige Retentionsfaktor der zu trennenden Komponente am Selektivitätspunkt XYZ, d.h. der Retentionsfaktor $k_{xyz}$ der jeweiligen heterogenen Kombination der stationären Phasen $S_i$

$$k_{xyz} = (X \ast k_A + Y \ast k_B + Z \ast k_C)/(X+Y+Z) \qquad (2)$$

berechnet, wobei X der Anzahl der Trennelemente $S_A$, Y der Anzahl der Trennelemente $S_B$ und Z die jeweilige Anzahl der Trennelemente $S_C$ entspricht.

Aus der Vielzahl der berechneten Kopplungsmöglichkeiten XYZ wird dann die Kopplung der Trennelemente oder Segmente mit der besten Selektivität a mit

$$\alpha = \frac{k_2}{k_1} \qquad (3)$$

oder mit der besten Auflösung $R_s$ mit

$$R_S = 2 \ast (t_{R2} - t_{R1}) / (W_{1/2}1 + W_{1/2}2) \qquad (4)$$

wobei $t_{R1}$ die Retentionszeit der jeweiligen Verbindung und $W_{1/2}i$ die Peakbreite in halber Höhe der jeweiligen Verbindung ist, bestimmt und die für dieses Trennproblem optimierte, aus N Trennelementen bestehende Trennvorrichtung, insbesondere Säule, dann aus den jeweiligen Elementen oder Säulensegmenten zusammeriggkoppelt.

Durch eine gezielt berechnete Kopplung der Trennelemente, insbesondere Säulensegmente, kann die stationäre Phase in Bezug auf das jeweilige Trennproblem optimiert werden, so dass es nicht mehr erforderlich ist, mit einer sich kontinuierlich oder stufenweise verändernden mobilen Phase zu eluieren oder sich vom Hersteller spezielle Mischbettsäulen packen zur lassen.

Ergibt bereits die Basismessung, dass mit nur einer Art von Säulensegmenten die gewünschte Trennung erreicht werden kann, kann die weitere Berechnung dazu genutzt werden, die Länge der Säule zu optimieren und die Säule nur aus der einen Art von Säulensegmenten zusammengebaut werden.

Andernfalls werden die unterschiedlichen Kombinationsmöglichkeiten der Säulensegmente bei einer vorgegebenen Anzahl von Säulensegmente N berechnet, bis die gewünschte Trennung erreicht ist. Die Optimierung und Berechnung kann dann abgebrochen werden, wenn die gewünschte Selektivität $\alpha_{krit}$ oder Auflösung $R_{s,krit}$ des bzw. der kritischen Peakpaare erfolgt ist.

Wird im Rahmen der Berechnung der verschiedenen Kombinationsmöglichkeiten mit beispielsweise drei Arten von Säulensegmenten und einer Gesamtanzahl von N Säulensegmenten keine hinreichend gute Trennung berechnet, d.h. kein $R_{s,kit}$ unterhalb des für das spezielle Trennproblem definierten Wertes erhalten, so wird die Anzahl N der Säulensegmente geändert, insbesondere erhöht, und mit dieser geänderten Anzahl N' die Berechnung nochmals durchgeführt.

Sollte im Rahmen dieser Berechnung mit N Säulesegmenten keine befriedigende Trennung vorausgesagt werden, so wird eine Neuberechnung unter Hinzufügung von einer oder mehreren zusätzlichen stationären Phasen notwendig.

Hierfür werden zusätzlich Basismessungen mit den zusätzlichen Säulensegmenten $S_j$ durchgeführt und dann eine Neuberechnung vorgenommen.

Falls bei einer gegebenen Kombination die Trennleistung nicht ausreichend sein sollte, so kann durch eine Erhöhung der Gesamtanzahl der Säulensegmente N im bestehenden Verhältnis die Auflösung verbessert werden. In der Praxis kann auch bei einer zu guten Trennung die Anzahl der Segmente im gleichen Verhältnis reduziert werden, um die gesamte Zykluszeit zu verkürzen.

Die für das jeweilige Trennproblem optimierte Trennvorrichtung wird anschließend aus den Trennelementen in der berechneten Anzahl und/oder Dimension gekoppelt und die entsprechende Trennung durchgeführt

Die Reihenfolge der Elution und die Auflösung der Peaks kann man aufgrund der Berechnung voraussagen.

Somit kann aus dem Set von Trennelementen schnell und effizient die für das jeweilige Trennproblem optimierte Trennvorrichtung, insbesondere Säule, zusammengestellt werden, und zwar im Allgemeinen auf der Grundlage von nur drei (!) Basismessungen.

Wenn auch häufig drei verschiedene stationäre Phasen ausreichend sind, um eine hinreichend effektive, insbesondere isokratische Trennung, zu erreichen, so kann selbstverständlich die Zahl der stationären Phasen weiter auf vier, fünf oder mehr erhöht werden, wobei die Formel für die Berechnung des heterogenen Retentionsfaktor K im Zähler und Nenner entsprechend auf n stationäre Phasen erweitert wird.

Sofern die stationären Phasen bzw. die Trennelemente, die die stationären Phasen umfassen, nicht dieselben Dimensionen (z.B. Durchmesser und Länge des gepackten Säulensegments) aufweisen, kann der Retentionsfaktor für jede Komponente nach folgender Gleichung berechnet werden

$$K_{\alpha\beta\gamma} = (\alpha * k_A + \beta * k_B + \gamma * k_C)/(\alpha + \beta + \gamma) \qquad (5)$$

wobei $\alpha$, $\beta$, $\gamma$ der gesamten internen Volumina der mit den stationären Phasen A, B und C gepackten Trennelemente in der heterogenen Kombination entsprechen. $k_{A,B,C}$ sind - wie bereits zuvor beschrieben - die durch die jeweiligen Basismessungen bestimmten Retentionsfaktoren.

Sofern bei der späteren Messung eine Schutzsäule in der Trennvorrichtung vorgeschaltet werden sollte, muss diese bei der Basismessung und in der Berechnung berücksichtigt werden.

Ein weiterer Vorteil ist es, dass das erste Säulensegment auch als Schutzsäule verwendet und betrachtet werden kann und bei Bedarf sehr leicht austauschbar ist. Somit ist der Einsatz einer zusätzlichen Schutzsäule nicht erforderlich.

Generell ist durch die erfindungsgemäße Vorrichtung und das erfindungsgemäße Verfahren nicht die mobile Phase einer sich kontinuierlich ändernden Zusammensetzung unterworfen, sondern die durch die Kopplung der jeweiligen Trennelemente trennungsspezifisch zusammengebaute Trennvorrichtung, insbesondere Säule, weist durch die Trennelemente oder Segmente mit den unterschiedlichen Selektivitäten die für eine selektive Trennung erforderliche, sich ändernde Zusammensetzung auf, das heißt, die Trennvorrichtung weist einen Gradienten der stationären Phase auf.

Damit kann die Trennung mit der erfindungsgemäßen Vorrichtung mit der gewünschten Selektivität auch isokratisch erfolgen, so dass die bei der Gradientenelution beschriebenen Nachteile vermieden werden. Es ist somit kein Rückspülen erforderlich, d.h. es wird Lösemittel gespart und die gesamte Zykluszeit verkürzt. Auch kann die mobile Phase oder jedenfalls ein Grossteil der Fraktionen, die bei einer isokratischen Elution nicht durch Substanzen anderer Polarität verunreinigt werden, wiederverwertet werden, wodurch zusätzlich Kosten für die Entsorgung und Neuanschaffung von Lösemittel gespart und zudem die Umwelt geschont wird.

Vorzugsweise werden hierfür einzelne Bereiche der mobilen Phase, die mit den jeweiligen getrennten Substanzen beladen sind, abgetrennt und das restliche Lösemittel aufgefangen, zurückgeleitet und wiederverwendet. Insbesondere im Bereich der präparativen Chromatographie, in der erhebliche Lösemittelmengen anfallen, ist die durch die isokratische Chromatographie erreichte Wiederverwendbarkeit der Lösemittel nicht nur aus Umweltschutzgründen von großem Vorteil, sondern auch eine erhebliche Kostenersparnis, da Entsorgungskosten und Neuanschaffungskosten für Lösemittel sehr stark reduziert sind.

Ein weiterer wesentlicher Vorteil der Erfindung besteht darin, dass durch die isokratische Elution weitaus mehr unterschiedliche Detektionsprinzipien und damit Detektoren zur Bestimmung der jeweiligen Substanzen eingesetzt werden können.

Nachdem die Zusammensetzung der mobilen Phase bei der isokratischen Elution konstant bleibt, kann zur universellen Detektion der Substanzen wieder das Differential-Refraktometer eingesetzt werden.

Häufig kann die isokratische Elution der Substanzen und damit die Trennung mit dem erfindungsgemäßen Set in einem Gemisch von Acetonitril/Wasser erfolgen, bei der der Anstieg der Absorption im UV erst bei einer Wellenlänge von 190 mm (50 % Transmission) beginnt. Substanzen mit Chromophoren können somit infolge der isokratischen Elution bis in den kurzwelligen UV-Bereich detektiert werden.

Die durch die Erfindung isokratisch durchführbare Trennung ermöglicht somit den Einsatz weiterer, häufig besser geeigneter, empfindlicherer und/oder kostengünstigerer Detektionsmethoden.

Durch die zeitliche Konstanz der Zusammensetzung der mobilen Phase ist zudem bei einer jeden Detektionsmethode selbstverständlich die Basislinie stabiler und mischungsbedingte Effekte werden vermieden.

Die isakratische Trennung wirkt sich auch positiv auf die Qualität der Massenspektren aus, da die Ionisierung konstant bleibt und zudem keine gradientenbedingten Sekundäreffekte auftreten (stabiler gleich bleibender Hintergrund).

Ferner können zur Detektion bei der isokratischen Elution auch elektrochemische Detektoren oder Leitfähigkeitsdetektoren eingesetzt werden.

Nachdem infolge der isokratischen Analyse nun auch nahezu alle Detektionsprinzipien zugänglich sind, besteht die Möglichkeit, die unterschiedlichen Detektoren seriell zu koppeln, um die Substanzen dadurch besser zu charakterisieren.

Nicht zuletzt sind bei der erfindungsgemäßen Vorrichtung die störungsanfälligen, zur Bereitstellung des Gradienten erforderlichen Geräte wie zusätzliche Pumpen und Gradientenmischer nicht mehr erforderlich, was nicht nur die Anschaffungskosten für den Chromatographen senkt, sondern auch noch die Betriebskosten vermindert.

Das erfindungsgemäße Set von Trennelementen und das erfindungsgemäße Verfahren sind für alle auf einer physikalisch-chemischen Trennung aufgrund von unterschiedlichen Wechselwirkungen mit wenigstens zwei Phasen basierenden Methoden, wie zum Beispiel chromatographische Verfahren, einsetzbar, wie der Gaschromatographie (GC), der Flüssigkeitschromatographie (LC) (Säulen- oder Planar-), der Chromatographie mit überkritischen Gasen als mobiler Phase (SFC), den elektrophoretischen Trennverfahren, jeweils im nano, mikro, analytischen und präparativen Einsatzbereich sowie im Bereich der Probenvorbereitung bzw. -aufreinigung mittels Festphasenextraktion oder Filtration.

In der Flüssigkeitschromatographie kommen auch Verfahren zur Anwendung, die unter vermindertem Druck (z.B. Flash-Chromatographhie) bzw. erhöhtem Druck (z.B. HPLC, MPLC) ablaufen oder verschiedene Wechselwirkungsmechanismen zur Trennung ausnutzen, z.B. Reversed Phase Flüssigkeitschromatograhie (RP), Normalphasenchromatographie (NP), Ionenchromatographie (IC), Größenausschlusschromatograhie (SEC, GPC) oder Hydrophobic Interaction Chromatographie (HIC, HILIC).

Ein Trennelement der stationären Phase ist ein Segment einer Säule.

Die Kopplung von stationären Phasen ist unabhängig von der Art des verwendeten Trägermaterials (Kieselgele, Polymere, Metalloxide, Gläser, Quarzgläser, Polysaccharide, Agarose-Gele, Kohlenstoff etc.) und gilt ebenso für alle chromatographischen Verfahrensgrößenordnungen von miniaturisierten Nanomethoden bis in den präparativen Bereich.

Überdies kann die stationäre Phase sowohl partikulär, faserförmig oder faserartig als auch monolithisch sein. Vorteilhaft am Einsatz von monolithischen stationären Phasen ist, dass diese sehr einfach gekoppelt werden können, da die stationäre Phase nicht durch Fritten oder Siebe festgehalten werden muss.

Besonders vorteilhaft ist die vorliegende Erfindung auch beim Einsatz in der Nanotechnologie, da Gradienten in der mobilen Phase bei solch geringen Mengen nur sehr schwer reproduzierbar realisierbar sind.

Selbstverständlich kann das erfindungsgemäße Set auch auf spezielle Trennmethoden angepasst sein oder spezielle Segmente für spezielle Trennprobleme, ggf. als zusätzliche Segmente, enthalten.

So ist es ebenfalls möglich, die stationäre Phase bei einer Ionen- oder auch Ionenpaar-Chromatographie aus Säulensegmenten aufzubauen oder beispielsweise auch, die Säulensegmente für die Ionenpaar-Chromatographie mit anderen Säulensegmenten, beispielsweise polaren Säulensegmenten, zu koppeln.

Ein weiterer Vorteil des Einsatzes gezielt vorausberechneter und dann zusammengekoppelter Trennvorrichtungen ist die Verkürzung der gesamten Zykluszeit. Die Verwendung der Trennelemente und der Berechung der einzelnen zu koppelnden Trennelemente und auch ihrer Anzahl ermöglicht letztendlich auch eine Optimierung der gesamten Zykluszeit, nämlich so kurz wie möglich, aber so lange wie für das Erreichen der gewünschten Trennung erforderlich.

Ein Set kann ebenfalls auch Segmente zur gezielten Adsorption bestimmter Substanzen, wie bei der Festphasenextraktion, umfassen. Aus dem zu trennenden Gemisch wird die betreffende Substanz in diesem spezifischen Adsorptionssegment nahezu quantitativ adsorbiert und somit in diesem Segment angereichert, um anschließend wieder desorbiert zu werden. Statt, wie bisher üblich, nur in einem Segment, wäre durchaus eine Kaskade von Segmenten zur gezielten Adsorption unterschiedlicher Substanzen in Reihe vorstellbar.

Die erfindungsgemäßen Segmente können auch in anderen Trennverfahren eingesetzt werden, wie bei der Elektrochromatographie, bei der die Substanzgemische aufgrund des elektroosmotischen Flusses getrennt werden, oder bei der Elektrophorese.

Das erfindungsgemäße Set und das erfindungsgemäße Verfahren sind für Trennverfahren mit einer mobilen Phase und/oder konstanter Geschwindigkeit wie beispielsweise HPLC geeignet.

Insbesondere dient das Set dazu, dem Anwender den Aufbau einer für seine (Routine)-analyse besonders geeignete Trennvorrichtung vor Ort zu ermöglichen, wobei die Trennung dann mit den bereits beschriebenen Vorteilen der isokratischen Elution erfolgen kann.

Die Vorteile der optimierten Trennvorrichtung werden insbesondere dann erreicht, wenn die einmal optimierte Trennvorrichtung eingesetzt wird, und zwar isokratisch und bei einer während der gesamten Trennung konstanten stationären Phase, d.h. auch ohne die Säulen zu "schalten".

In besonderen Anwendungsfällen kann selbstverständlich zusätzlich zu der Optimierung der stationären Phase auch noch die mobile Phase für die betreffende Trennung optimiert werden, beispielsweise auch durch einen Gradienten.

Die spezifische Bauart der jeweiligen Säulensegmente hängt selbstverständlich davon ab, für welche Art von Trennverfahren und für welche Mengen an zu trennenden Substanzen die aus den zu koppelnden Trennelementen hergestellte Trennvorrichtung einzusetzen ist.

Die Länge jedes einzelnen Trennelements hängt von der späteren Gesamtlänge der die stationäre Phase umfassenden Vorrichtung, insbesondere der Säule, und der gewünschten Anzahl an Segmenten und dem spezifischen Trennproblem ab. Bei Trennelementen, die Segmente von analytischen LC-Säulen sind, beträgt die Länge eines Segments wenigstens 0,5 cm, vorzugsweise wenigstens 1,0 cm, damit die Segmente noch auf einfache Weise mechanisch aneinanderkappelbar sind. Bevorzugt beträgt die Länge eines Säulensegments 2 cm, so dass eine 20 cm lange Säule aus 10 gekoppelten Segmenten aufgebaut werden kann. Besonders bevorzugt beträgt die Länge eines Säulensegments 1 cm oder ein ganzzahliges Vielfaches davon und kann bis zu 500 cm betragen, vorzugsweise beträgt die Länge eines Säulensegments nicht mehr als 12,5 cm. In der Kapillar Gaschromatographie (cGC) sind Säulensegmentlängen bis zu 100 m vorstellbar, vorzugsweise beträgt die Länge 25 m.

Die Säulensegmente können sowohl die Form eines geraden, als auch eine spiralförmigen Zylinders (insbesondere bei langen Säulensegmenten, beispielsweise für die GC) aufweisen oder auch andersartig geformt sein.

Der Innendurchmesser der Säule variiert stark nach der zu trennenden Substanzmenge und dem jeweiligen Chromatographieverfahren und kann etwa zwischen 20 μm und 2 m betragen, bei einer analytischen Säule im Allgemeinen zwischen 20 μm und 10 mm. Für isolierungszwecke wird die Säule mit einem Innendurchmesser zwischen 2 mm und 1 m eingesetzt.

Das Set umfasst "Vielfach-Segmente". Bei diesen "Vielfach-Segmenten" handeit es sich um Säulensegmente einer bestimmten, auch in dem "Enfachsegment vorhandenen stationären Phase, wobei die Länge des "Vielfach-Segments" jedoch ein ganzes Vielfaches der Länge eines Einzelsegments beträgt. Beispielsweise können neben 10 Enzelsegmenten mit einer Phenylgruppen umfassenden Phase der Länge 2 cm auch ein "Doppelsegment" mit Phenylgruppen umfassender Phase der Länge 4 cm und ein Dreifachsegment mit der Phenylgruppen umfassenden Phase der Länge 6 cm in dem Set enthalten sein, wobei durch diese zusätzlich vorhandenen Vielfach-Segmente die für das Zusammen- und Auseinanderkoppeln der Segmente erforderliche Zeit reduziert werden kann.

Theoretische Überlegungen anhand des Prisma-Modells zeigen, dass gerade dann, wenn zusätzlich zu Säulensegmenten der Länge 1 auch jeweils ein Säulensegment einer jeden Art von stationärer Phase mit einer möglichst geringen Länge (z.B. 1/2 oder 1/4) mit in die Berechnung einbezogen wird, bei einer vertretbaren Anzahl von Berechnungen ein weitaus breiterer Arbeitsbereich zur Selektivitätsoptimierung mit abgedeckt wird, als wenn beispielsweise die Gesamtanzahl N der Säulensegmente insgesamt um ein oder zwei Segmente erhöht würde.

Die Kopplung der Trennelemente sollte über möglichst totvolumenfreie und inerte Verbindungen erfolgen, wie zum Beispiel über

➢ Kapillarverbindungen

➢ direkt unter Zuhilfenahme eines totvolumenarmen Kopplungsstückes

➢ bei Kapillarsäulen durch Verbinden der Kapillarenden mittels eines Kupplungsstückes, indem die Kapillarenden direkt auf StoB zusammengeführt werden

➢ Ebenfalls bei Kapillarsäulen durch Zusammenschrumpfen der Kapillarenden über einen Schrumpfschlauch

➢ Durch Zusammenschrauben der Säulenenden mit einer Dichtscheibe mit Durchgangsbohrung

➢ Über eine Schraubverbindung mit Kapillarbohrung

➢ Direkt durch Zusammenführung des Packungsendes des einen Trennelementes mit dem Packungsende des anderen Trennelementes

Vorzugsweise weist ein jedes Trennelement an jedem Ende dieselben Kopplungsmittel auf, so dass ein jedes Ende eines Säulensegments mit einem jeden Ende eines anderen Säulensegments verbindbar ist.

Eine weitere bevorzugte Ausführungsform sieht vor, an den beiden Enden des Säulensegments voneinander verschiedene Kopplungsmittel vorzusehen (männlich, weiblich). Dabei taucht das Ende des einen Säulensegmentes in den Anfang des Anderen ein, wobei der Innendurchmesser des Packungsquerschnittes erhalten und somit die lineare Strömungsgeschwindigkeit konstant gehalten wird. Dadurch entstehen an den Kopplungsstellen keine Turbulenzen. Weitere Vorteile dieses Systems sind die gekammerte Dichtung an den Kopplungsstellen und die geschützte Packung der einzelnen Trennelemente. Ferner ist die Packung innen abgeschlossen und geschützt. Besonders vorteilhaft ist die einfache Handhabung durch Ineinanderstecken. Das Wichtigste bei dieser Kopplung ist jedoch die nahezu totvolumenfreie Kopplung, da das Trennsegmentende mit einer dünnen Fritte direkt auf ein Sieb mit gewünschter Kreuzfiltration gepresst wird.

Ebenfalls ist möglich, an jedem Ende eines Säulensegmentes einen monolithischen Abschluss vorzusehen, dessen Dicke vorzugsweise zwischen 0,5 und 1 mm beträgt. Diese Säulensegmente werden in Analogie zu der oben beschriebenen Art und Weise (männlich, weiblich) gekoppelt. Der Vorteil hierbei ist, dass keine metallischen Abschlussteile wie Sieb und Fritte verwendet werden müssen. Ferner kann der monolithische Abschluss chemisch modifiziert werden und somit der jeweils verwendeten stationären Phase angepasst werden. Bei diesem System besteht die Möglichkeit, zwei Trennelemente ohne Übergangselement (wie Sieb und Fritte) miteinander zu verbinden.

Das erfindungsgemäße Verfahren wird nun anhand eines Ausführungsbeispiels näher erläutert.

**I. Beispiel der Berechnung der optimierten Kombination der betreffenden Trennelemente (Säulensegmente) auf der Grundlage des Prisma-Modells:**

*a) Für ein Gemisch aus Methylparaben, Acetophenon, Ethylparaben, Dimethylphthalat, 2,3-Dimethylphenol, Methylbenzoat und Anisol ist die bestmögliche Trennung, die bei einer Kombination von 10 Säulensegmenten mit Cyano- und/oder Phenyl- und/oder C18-Gruppen in Acetonitril Wasser 30: 70 (v/v) als Lösemittel möglich ist, zu bestimmen.*

Das Set umfasst jeweils wenigstens 10 Säulensegmente mit CN als stationärer Phase ($S_{CN}$), 10 Säulensegmente mit Phenylgruppen als stationärer Phase $S_{PH}$ und 10 Säulensegmente mit C18 als stationärer Phase ($S_{C18}$).

Für jede dieser drei verschiedenen stationären Phasen wird im Rahmen einer Basismessung für jede der 7 verschiedenen zu trennenden Substanzen nach (1) der jeweilige Retentionsfaktor k bestimmt, der in der nachfolgenden Tabelle wiedergegeben ist:

|  | Komponente | $k_{CN}$ | $k_{PH}$ | $K_{C18}$ |
|---|---|---|---|---|
| 1 | Methylparaben | 2,4 | 5,0 | 10,2 |
| 2 | Acetophenon | 2,8 | 7,0 | 8,6 |
| 3 | Ethylparaben | 3,1 | 7,7 | 20,1 |
| 4 | Dimethylphthalat | 3,2 | 9,6 | 10,5 |
| 5 | 2,3-Dimethylphenol | 3,5 | 9,7 | 26,3 |
| 6 | Methylbenzoat | 3,5 | 11,0 | 17,2 |
| 7 | Anisol | 3,7 | 11,8 | 19,0 |

Im vorliegenden Beispiel wird die Gesamtanzahl der zu koppelnden Säulensegmente N auf 10 festgelegt. Für eine jede heterogene Kopplung der Säulensegmente, d.h. X-fach die stationäre Phase $S_{CN}$, Y-fach die stationäre Phase $S_{PH}$ und Z-fach die stationäre Phase $S_{C18}$ mit N = 10 = X + Y + Z wird nun der Retentionsfaktor

$$k_{xyz} = (X*k_{CN} + Y * k_{PH} + Z* k_{C18})/(X+Y+Z) \qquad (6)$$

der heterogenen Kopplung am Selektivitätspunkt XYZ nach (2) berechnet. Aus den berechneten Retentionsfaktoren der betreffenden Kopplungen XYZ von Trennelementen werden nun die Selektivitäten aller benachbarten Peakpaare berechnet. Der optimale Selektivitätspunkt ist der Punkt XYZ, in dem alle Peakpaare eine Basislinientrennung erreichen. Sollten mehrere Selektivitätspunkte eine Basislinientrennung erreichen, so ist der Punkt ideal, bei dem zusätzlich der kleinste Retentionsfaktor für die letzt eluierende Komponente vorhanden ist.

Der Wert für die Basislinientrennung, der Punkt, an dem ein Peak wieder die Basislinie erreicht, hängt von dem jeweiligen chromatographischen Verfahren bzw. von der Trenneffizienz ab, die das jeweilige Trennverfahren erreichen kann. Bei der HPLC sollte dieser Wert, um den Anforderungen an eine gute Auflösung zu genügen, etwa 1,15 betragen, bei der GC etwa 1,05 und bei der DC größer als 1,3 sein.

Wie die nachfolgende Gegenüberstellung gemessener und berechneter Retentionsfaktoren am Beispiel des Selektivitätspunktes 442, d.h. 4 Segmente $S_{CN}$, 4 Segmente $S_{PH}$ und 2 Segmente $S_{C18}$, zeigt, liegt die durchschnittliche Abweichung zwischen berechneten und gemessenen Retentionsfaktoren im Mittel bei ca. 4 %:

|  | 1 | 2 | 3 | 4 | 5 | 6 | 7 |
|---|---|---|---|---|---|---|---|
| $k_{gemessen}$ | 6,59 | 7,01 | 9,04 | 11,77 | 12,22 | 13,29 | 15,11 |
| $K_{brerechnet}$ | 6,31 | 6,86 | 8,80 | 11,07 | 11,81 | 12,82 | 14,21 |
| Abweichung [%] | 4,5 | 2,2 | 2,7 | 6,3 | 3,5 | 3,6 | 6,3 |

Die Selektivität einer Trennung hängt u.a. davon ab, wie viele Trennelemente oder Säulensegmente mit unterschiedlichen stationären Phasen (oder deren unterschiedlicher Polarität) miteinander gekoppelt werden können und wie groß die Gesamtanzahl N der zu koppelnden Säulensegmente ist.

*A2) Für ein Gemisch aus 8 Triazinen ist die bestmögliche Trennung, die bei einer Kombination von je 10 Säulensegmenten mit Cyano- und/oder Phenyl- und/oder C18-Groppen und/oder C18 mit eingebundener AmidGruppe (polar embedded) in Methanol/Wasser 50:50 (v/v) als Lösemittel möglich ist, zu bestimmen.*

Das Set umfasst, jeweils wenigstens 10 Säulensegmente mit CN als stationärer Phase ($S_{CN}$), 10 Säulensegmente mit Phenylgruppen als stationärer Phase $S_{PH}$, 10 Säulensegmente mit C18 als stationärer Phase ($S_{C18}$) und 10 Säulensegmente mit polar embedded C18 als stationäre Phase ($S_{peC18}$).

Für jede dieser vier verschiedenen stationären Phasen wird im Rahmen einer Basismessung für jede der 8 verschiedenen zu trennenden Substanzen nach (1) der jeweilige Retentionsfaktor k bestimmt, der in der nachfolgenden Tabelle wiedergegeben ist:

|  | Komponente | $k_{CN}$ | $k_{PH}$ | $k_{C18}$ | $K_{peC18}$ |
|---|---|---|---|---|---|
| 1 | Prometon | 1,16 | 4,57 | 6,09 | 4,51 |
| 2 | Simetryn | 1,28 | 6,82 | 11,85 | 7,55 |
| 3 | Ametryn | 1,41 | 7,73 | 12,18 | 7,42 |
| 4 | Prometryn | 1,45 | 10,41 | 22,82 | 14,19 |
| 5 | Terbutryn | 1,39 | 10,15 | 19,70 | 11,16 |
| 6 | Simazin | 1,61 | 11,85 | 24,03 | 15,72 |
| 7 | Atrazin | 1,78 | 18,57 | 46,50 | 27,22 |
| 8 | Propazin | 1,97 | 21,69 | 55,86 | 27,85 |

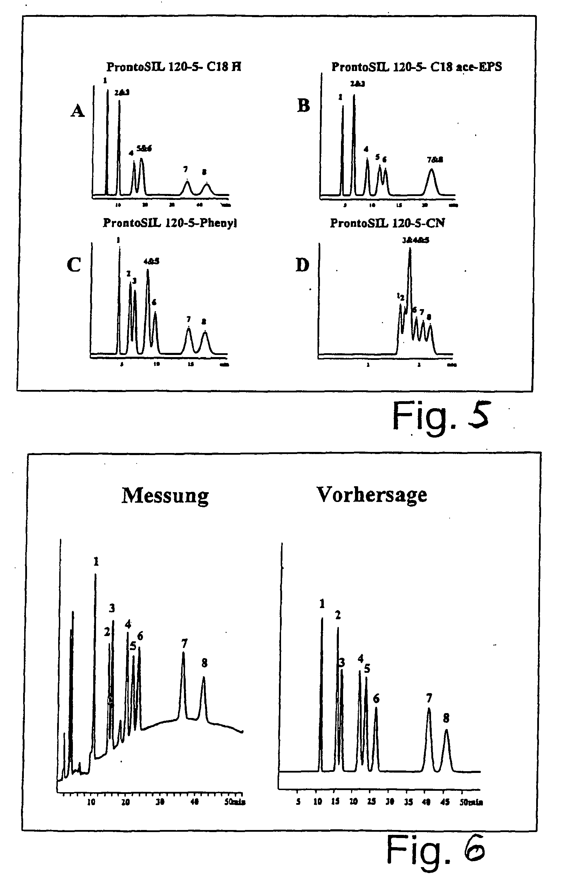

Die Chromatogramme zu den Werten sind in Figur 5 dargestellt. Es ist daraus klar ersichtlich, dass keine der einzelnen Trennsäulen an sich in der Lage ist, das Trennproblem zu lösen.

Die optimale Zusammensetzung der stationären Phase kann aus der Berechnung der k-Werte und Selektivitäten aller Kombinationsmöglichkeiten bestimmt werden. Sie besteht in diesem Falle aus 180 mm der Phenyl Phase, 60 mm der C18 Phase mit polar eingebundener Gruppe und 60 mm der Cyano Phase.

Die für die optimale Säulenzusammensetzung berechneten Retentionsfaktoren sind in der folgenden Tabelle den gemessenen Werten gegenübergestellt. Die Abweichungen betragen durchschnittlich 3,4 %.

|  | 1 | 2 | 3 | 4 | 5 | 6 | 7 | 8 |
|---|---|---|---|---|---|---|---|---|
| $k_{gemessen}$ | 4,30 | 6,42 | 6,90 | 9,09 | 9,96 | 10,75 | 17,21 | 20,19 |
| $K_{berechnet}$ | 4,30 | 6,47 | 7,06 | 9,45 | 10,29 | 11,60 | 18,52 | 20,74 |
| Abweichung [%] | 0,0 | 0,8 | 2,3 | 3,8 | 3,2 | 7,3 | 7,1 | 2,7 |

In Figur 6 ist das berechnete dem gemessenen Chromatogramm gegenüber gestellt. Die hervorragende Übereinstimmung ist klar erkennbar.

*b) Anzahl der Kombinationsmöglichkeiten*

I.) Ausgehend von s = 3 unterschiedlichen Säulensegmenten ($S_A$, $S_B$ und $S_C$; hier: $S_{CN}$, $S_{PH}$ und $S_{C18}$) gleicher Dimension und einer Gesamtanzahl von N = 10 der zusammenzukoppeinden Säulensegmenten ergeben sich 27 Kombinationsmöglichkeiten, wenn nur zwei der drei verschiedenen Säulensegmente miteinander gekoppelt werden, d.h. nur $S_A$, $S_B$ oder $S_A$, $S_C$ oder $S_B$, $S_C$. Weiterhin gibt es weitere 36 Kombinationsmöglichkeiten, wenn alle drei verschiedenen Säulensegmente $S_A$, $S_B$, $S_C$ miteinander gekoppelt werden.
Insgesamt gibt es somit bei drei Arten von Säulensegmenten unterscttiedlicher Polarität und der Gesamtzahl von 10 zu koppelnden Segmenten 63 Kombinationsmöglichkeiten.

II) Wird die Anzahl der zu kombinierenden Säulen nicht mit genau 10, sondern wird als Gesamtanzahl N ein Bereich zwischen 6 bis 15 vorgegeben, so erhöht sich bei n = 6 bis 15, s = 3 die Anzahl der Kombinationsmöglichkeiten auf 625.

III) Der Einsatz einer weiteren stationären Phase $S_D$, d.h. s = 4, zu der obigen Berechung der Kombinationsmöglichkeiten (i), das heißt N = 10, mit drei stationären Phasen ergibt 960 Kombinaüonsmögiichkeiten mit 2, 3 oder 4 stationären Phasen.

iv) Wird ausgehend von iii) die Gesamtanzahl auf zumindest 6 und höchstens 15 erweitert, so ergeben sich mit s = 4 und den Kombinationen von jeweils 3 Phasen insgesamt 2.500 Möglichkeiten.

Durch Erweiterung der Anzahl der zur Verfügung stehenden stationären Phasen zum Beispiel auf fünf oder mehr, der Kombinationen untereinander (zum Beispiel Kombinationen nicht mehr von drei, sondern von vier verschiedenen stationären Phasen bei der Kopplung), ergibt sich eine weitere Erhöhung der Kombinationsmöglichkeiten. Ein weiteres "Feintuning" kann unter Berücksichtigung von ½ oder ¼ Segmenten in der Berechnung erfolgen.

Die Erfindung wird nachfolgend anhand eines bevorzugten Ausführungsbeispiels für die Kopplung der Säulensegmente beschrieben.

Die Säule besteht aus einem bzw. mehreren Säulensegmenten und einer Haltevorrichtung, die ihrerseits aus einzelnen miteinander verschraubbaren Halteetementen besteht, die je nach Bedarf mit den Anschlusteilen am oberen und unteren Ende der jeweiligen Säule verschraubt werden.

Unabhängig von dieser nachfolgend im Detail beschriebenen besonders bevorzugten Ausführungsform ist es ebenfalls möglich, die einzelnen Halteelemente durch Bajonettverschlüsse oder andere Verschlussarten zu verbinden. Außerdem besteht auch die Möglichkeit, ganz auf einzelne Halteelemente zu verzichten und die Säulensegmente in eine Führungshülse der entsprechenden Länge mit Gewinden an den Enden zu geben und dann die einzelnen Säulensegmente axial mit den auf der Führungshülse verschraubbaren Anschlusteilen zusammenzupressen.

Die Säulensegmente können auch in einer entsprechenden Vorrichtung hydraulisch axial zusammengepresst werden.

Wesentlich bei der nachfolgenden besonders bevorzugten Ausführungsform ist, dass der Innendurchmesser der Säule auch in den Kopplungsstellen gleich bleibt und damit die Strömungsgeschwindigkeit innerhalb der gesamten Säule konstant ist.

Die nachfolgend beschriebene Säulenkopplung kann darüber hinaus auch generell zur Kopplung von Säulen, beispielsweise von Vor- und Hauptsäulen, verwendet werden.

Es zeigen:

**Figur 1:**    a) eine Explosionszeichnung eines Säulensegments und b) eine schematische Darstellung des kompletten Säulen- segments,

**Figur 2:**    eine schematische Darstellung des Einbaus eines Säulen- segments aus Fig. 1 b) in ein Halteelement 30 (Schritt 1), den Einbau eines weiteren Haltelements 30' (Schritt 2) und den Einbau eines weiteren Säulensegments 11' (Schritt 3),

**Figur 3:**    eine schematische Darstellung der Kopplung des obersten Säulensegments 11 bzw. des obersten Halteelements 30 und des untersten Säulensegments 11" bzw. des untersten Halteelements 30" an die jeweiligen Adapter und

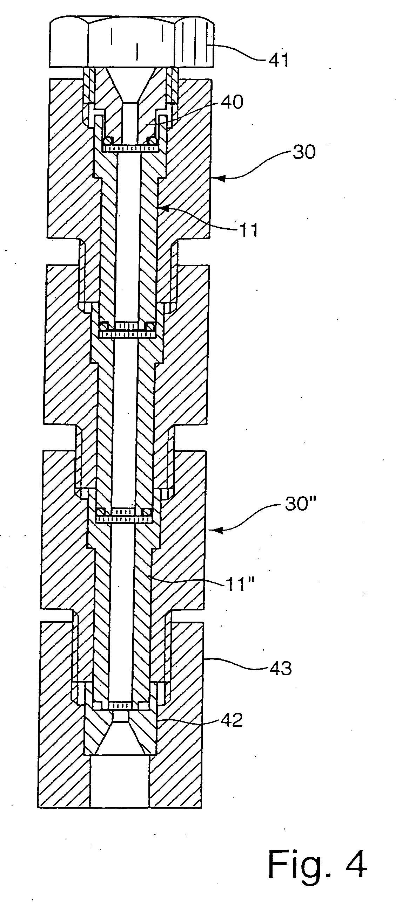

**Figur 4:**    eine schematische Darstellung der zu einer Säule zusam- mengekoppelten Säulensegmente und Adapter.

**Figur 5:**    Trennen der Triazine aus dem unterschiedlichen, stationären Phasen.

**Figur 6:**    Trennung der Triazine: Messung und Vorhersage.

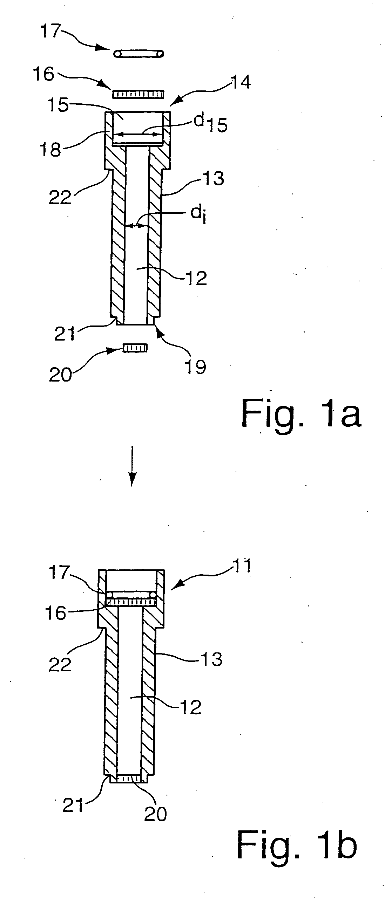

Das Säulensegment 11 (vgl. Fig. 1) umfasst ein Säulenrohr 13 mit einer stationären Phase 12. Das Säulenrohr 13, das beispielsweise aus Metall, Kunststoff, Keramik oder deren Kombinationen sein kann, besitzt eine vorgegebene Außenkontur mit Stufen 22, 21 und einen konstanten Innendurchmesser $d_1$.

Am Kopfende 14 ist das Rohr 13 mit einer definierten Vertiefung 15 versehen, die im Durchmesser $d_{15}$ größer sein muss als der Innendurchmesser $d_1$. Die Vertiefung 15 besitzt einen stufenförmigen Absatz, der der Aufnahme der Dichtung 17 dient. Die Dichtung 17 kann beispielsweise aus Kunststoff, Metall oder anderen zur Dichtung geeigneten Werkstoffen sein. Die Vertiefung 15 nimmt einen Filter oder eine Filter-Siebkombination 16, die die stationäre Phase schützt, und die darüber liegende Ringdichtung 17 auf. Die Wandung 18 der Vertiefung 15 dient gleichzeitig als Führung bei der Kopplung mit einem weiteren Säulensegment 11' oder zum Einsetzen eines später beschriebenen Anschlussadapters männlich 40.

Das Rohr 13 ist am seinem Fuß 19 entsprechend einer männlichen Verbindung 21 ausgebildet und durch eine poröse Fritte 20 verschlossen, die dazu dient, die stationäre Phase 12 im Rohr 13 zu halten. Die poröse Fritte 20 kann aus Metall, Kunststoff, Keramik, gesintertem Kieseigel, monolithischem Kieseigel oder monolithischem Polymer, auch oberflächenmodifiziert, sein.

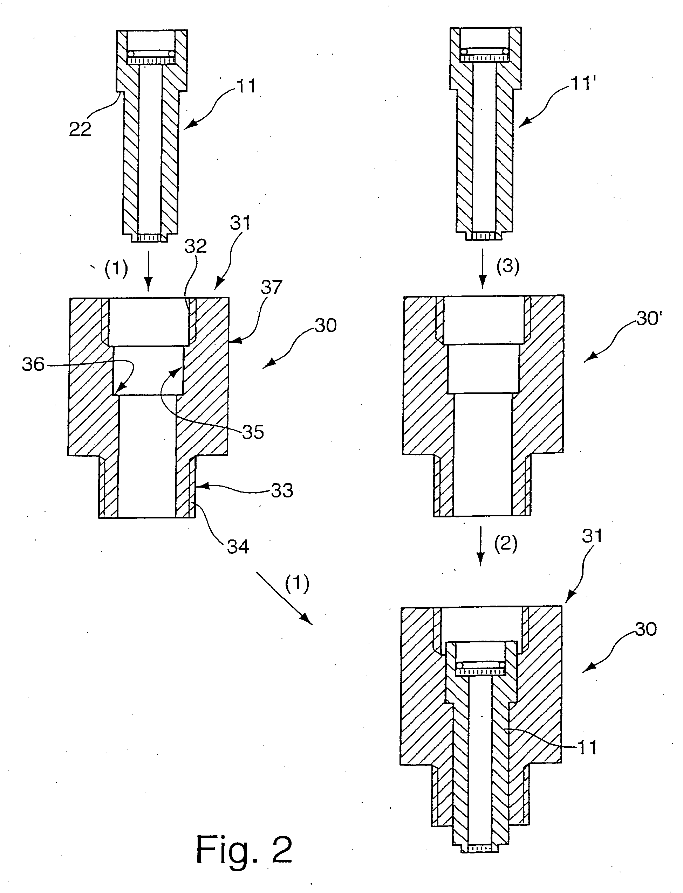

Das Halteelement 30 (Fig. 2) dient zur Aufnahme des Säulensegmentes 11 und dessen Kopplung. Das Halteelement 30 kann aus Metall, Kunststoff, Keramik oder deren Kombination sein. Es weist am Kopfende 31 ein Innengewinde 32 und am Fußende 33 ein Außengewinde 34 auf. Im Inneren des Halteelements 30 befindet sich eine Durchgangsbohrung 35 mit einer Stufe 36, in die das Säulensegment 11 aufgenommen wird. Die Stufe 22 des Säulensegments 11 liegt auf der Stufe 36 des Halteelements 30 auf.

Die Außenfläche 37 des Halteelements 30 kann für eine einfachere Handhabung gekordelt oder gerändelt sein bzw. Flächen zum Angriff von Schraubenschlüsseln aufweisen.

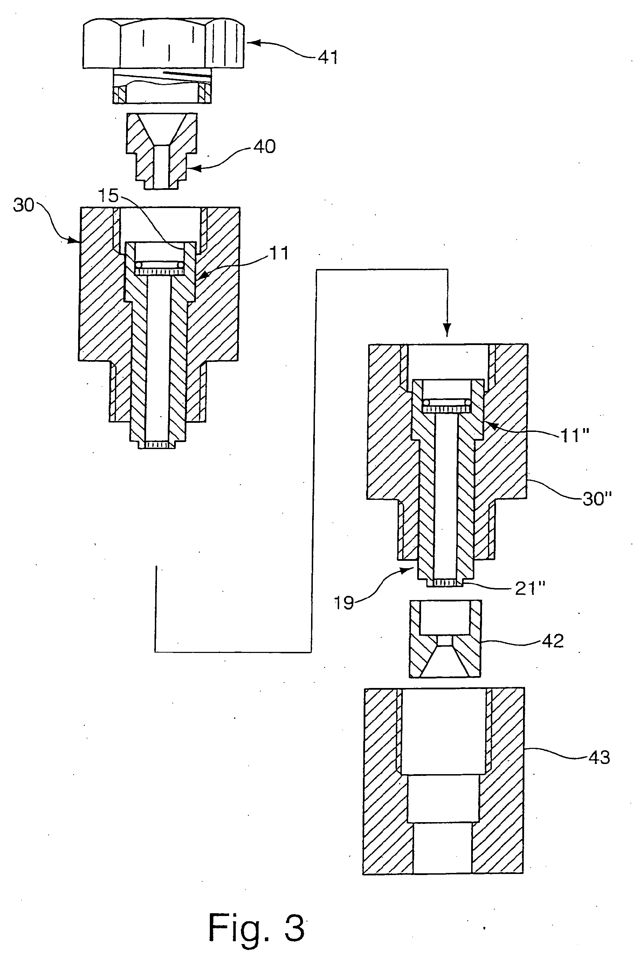

Der Zusammenbau der Säulensegmente ist in den Figuren 2 und 3 dargestellt:

1. Das Säulensegment 11 ist in der zuvor beschriebenen Weise in ein Haltelement 30 eingehängt (Pfeil 1 in Fig. 2).

2. Ein weiteres Halteelement 30' wird in das erste Halteelement 30 am Kopfende 31 bis zum Anschlag eingeschraubt. Hierdurch wird das Säulenelement 11 in dem Halteelement 30 fixiert (Pfeil 2 in Fig. 2).

3. Ein weiteres Säulensegment 11' wird in das verschraubte Halteelement 30' einsetzt (Pfeil 3 in Fig. 2).

4. Schritt 2 und 3 werden solange wiederholt, bis die gewünschte Anzahl Säulensegmente 30 erreicht ist.

5. In die Vertiefung 15 im obersten Säulensegments 11 in Fig. 3 wird ein männlicher Anschlussadapter 40 eingesetzt und die A-dapterschraube 41 in das Halteelement 30 eingeschraubt.

6. Am unteren Ende 19 des unteren Säulensegments 11" wird auf das herausragende Stück 21" der weibliche Anschlussadapter 42 aufgesteckt und mit der Adaptermutter 43 auf dem Halteelement 30 aufgeschraubt.

7. Die so entstandene segmentierte Säule kann jetzt mittels einer Kapillarverbindung (Edelstahl, Kunststoff oder fused Silica) an das chromatographische System angeschlossen werden.

Sofern in der obigen bevorzugten Ausführungsform beispielsweise ein Säulensegment mit der doppelten Länge mit anderen Säulensegmenten verbunden werden soll, so kann das Säulensegment mit der doppelten Länge in zwei miteinander verbundenen Halteelementen gehalten und weiter gekoppelt werden.

**Patentansprüche**

1. Verwendung eines Sets von Elementen im nano, mikro, analytischen oder preparativen Einsatzbereich zur Herstellung einer Vorrichtung zur Trennung von Substanzen durch Verteilung zwischen einer stationären und einer mobilen Phase, wobei das Set mindestens sechs einzelne miteinander zu einer Trennvorrichtung koppelbare Trennelemente aufweist, wobei die Trennelemente Säulensegmente sind und jeweils eine beliebige stationäre Phase, ein Trägerelement und Kopplungsmittel umfassen und wobei in dem Set jeweils mindestens zwei unterschiedliche stationäre Phasen $S_i$ (i ≥ 2) und von jeder Art von Trennelement $T_i$ mit einer bestimmten stationären Phase $S_i$ wenigstens drei Stück vorhanden sind und der Benutzer vor Ort mit dem Set durch einfaches mechanisches Koppeln der erforderlichen Säulensegmente die gewünschte Trennvorrichtung herstellt.

**2.** Verwendung nach Anspruch 1, **dadurch gekennzeichnet, dass** am oberen und am unteren Ende der Säulensegmente voneinander unterschiedliche Kopplungsmittel (15, 21) vorgesehen sind, so dass das untere Ende des einen Säulensegmentes in ein oberes Ende eines anderen Säulensegmentes einführbar ist,

**3.** Verwendung nach Anspruch 2, **dadurch gekennzeichnet, dass** beim Eintauchen des Endes des einen Säulensegments in den Anfang des anderen Säulensegments der Innendurchmesser der Packungsquerschnitte erhalten bleibt.

**4.** Verwendung nach einem der vorangegangenen Ansprüche, **dadurch gekennzeichnet, dass** das Set Trennelemente mit wenigstens drei stationären Phasen unterschiedlicher Selektivitäten $S_A$, $S_B$ und $S_C$ umfasst und von jeder dieser drei Arten von Trennelementen in dem_Set wenigstens 3, vorzugsweise wenigstens 5, bevorzugt wenigstens 7, und besonders bevorzugt 10 oder mehr enthalten sind.

**5.** Verwendung nach einem der vorangegangenen Ansprüche, **dadurch gekennzeichnet, dass** die stationären Phasen des Sets aus der Gruppe der gesättigten oder ungesättigten Alkylgruppen (C1, C2, C3, C4, C6, C8, C12, C14, C16, C18, C22, C27, C30), die mono-, poly- oder acyclisch, ali- oder heterocyclisch sein können, der Nitro-, Cyano-, Carbonyl-, Carboxyl-, Hydroxyl-, Diol-, oder Thiolgruppen, Glycidoxy-Gruppen, ggf. verethert, Amino- oder chiralen Gruppen, Amidgruppen, Carbamate, Harnstoff, Perfluoralkylgruppen oder Perfluorarylgruppen und andere Halogenalkyl- und Halogenarylgruppen, Polybutadiengruppen oder anderen organischen Polymeren, affinitätschromatographischen Modifizierungen oder ionenaustauschfähige Gruppen (Kationenaustauscher, Anionenaustauscher, Zwitterionen), nichtmodifizierten Tägermaterialien (z.B. Kieselgel) und molekular geprägten Polymeren (MIPs) ausgewählt werden.

**6.** Verwendung nach einem der vorangegangenen Ansprüche, **dadurch gekennzeichnet, dass** die Länge eines Säulensegmentes, zwischen 0,5 cm und 50 m, vorzugsweise zwischen 1,0 und 12,5 cm und besonders bevorzugt zwischen 1,5 und 2,5 cm, beträgt.

**7.** Verwendung nach einem der vorangegangenen Ansprüche, **dadurch gekennzeichnet, dass** das Set zusätzlich Säulensegmente zur Durchführung der Basismessung umfasst, wobei die Anzahl der Basismessungselemente vorzugsweise wenigstens der Anzahl der in dem Set enthaltenen Trennelemente $T_i$ unterschiedlicher stationärer Phasen $S_i$ entspricht.

**8.** Verwendung nach einem der vorangegangenen Ansprüche in der Verwendung nach einem der vorangegangenen Ansprüche in der Flüssigkeitschromatographie (Säulen- oder Planar-), der Gaschromatographie, der Chromatographie mit überkritischen Gasen als mobiler Phase (SFC) und der elektrophoretischen Trennverfahren.

**9.** Verwendung nach einem der vorangegangenen Ansprüche in Trennverfahren mit äquilibrierter mobiler Phase und/ oder isokratischen und/oder isothermen Trennverfahren.

**10.** Verwendung nach einem der Ansprüche 1 bis 9, **dadurch gekennzeichnet, dass** das Trennelement ein im Wesentlichen totvolumenfrei gekoppeltes Säulensegment ist.

**11.** Verwendung nach einem der Ansprüche 1 bis 10, **dadurch gekennzeichnet, dass** am oberen und unteren Ende des Säulensegmentes ein männliches und ein korrespondierendes weibliches Kopplungsmittel vorgesehen sind.

**12.** Verwendung nach einem der Ansprüche 1 bis 11, **dadurch gekennzeichnet, dass** die Kopplung der Säulensegmente (11) über Halteelemente (20), die die Säulensegmente aufnehmen, erfolgt.

**13.** Verwendung nach einem der Ansprüche 1 bis 12, **dadurch gekennzeichnet,
dass** aus den bestimmten Retentionsfaktoren $k_i$ jeder der vorliegenden stationären Phasen $S_i$ ($i \geq 2$) die optimierte Kombination der Selektivitäten und der jeweiligen Dimension des Trennelemente über das Prisma-Modell bestimmt wird und die Trennelemente dann zur optimierten Trennvorrichtung gekoppelt werden.

**14.** Set von Elementen für die nano, mikro, analytischen oder preparativen Einsatzbereich zur Herstellung einer Vorrichtung zur Trennung von Substanzen durch Verteilung zwischen einer stationären und einer mobilen Phase, wobei das Set mindestens sechs einzelne miteinander zu einer Trennvorrichtung koppelbare Trennelemente aufweist, wobei die Trennelemente Säulensegmente sind und jeweils eine beliebige stationäre Phase, ein Trägerelement und Kopplungsmittel umfassen und wobei in dem Set jeweils mindestens zwei unterschiedliche stationäre Phasen $S_i$ ($i \geq 2$) und von jeder Art von Trennelement $T_i$ mit einer bestimmten stationären Phase $S_i$ wenigstens drei Stück vorhanden sind **dadurch gekennzeichnet, dass** das Set Vielfachsegmente oder - elemente umfasst, deren Länge oder Dimension einem Vielfachen der Länge oder Dimension eines einfachen Trennelements entspricht.

15. Set nach Anspruch 14, **dadurch gekennzeichnet, dass** beim Eintauchen des Endes des einen Säulensegments in den Anfang des anderen Säulensegments der Innendurchmesser der Packungsquerschnitte erhalten bleibt.

16. Set nach einem der Ansprüche 14 oder 15, **dadurch gekennzeichnet, dass** das Set Trennelemente mit wenigstens drei stationären Phasen unterschiedlicher Selektivitäten $S_A$, $S_B$ und $S_C$ umfasst und von jeder dieser drei Arten von Trennelementen in dem Set wenigstens 3, vorzugsweise wenigstens 5, bevorzugt wenigstens 7, und besonders bevorzugt 10 oder mehr enthalten sind.

17. Set nach einem der Ansprüche 14 bis 16, **dadurch gekennzeichnet, dass** die stationären Phasen des Sets aus der Gruppe der gesättigten oder ungesättigten Alkylgruppen (C1, C2, C3, C4, C6, C8, C12, C14, C16, C18, C22, C27, C30), die mono-, poly- oder acyclisch, ali- oder heterocyclisch sein können, Nitro-, Cyano-, Carbonyl-, Carboxyl-, Hydroxyl-, Diol-, oder Thiolgruppen, Glycidoxy-Gruppen, ggf. verethert, Aminio- oder chiralen Gruppen, Amidgruppen, Carbamate, Harnstoff, Perfluoralkylgruppen oder Perfluorarylgruppen und andere Halogenalkyl- und Halogenarylgruppen, Polybutadiengruppen oder andere organische Polymere, affinitätschromatographischen Modifizierungen oder ionenaustauschfähige Gruppen (Kationenaustauscher, Anionenaustauscher, Zwitterionen), nichtmodifizierte Tägermaterialien (z.B. Kieselgel) und molekular geprägte Polymere (MIPs) ausgewählt werden.

18. Set nach einem der Ansprüche 14-17, **dadurch gekennzeichnet, dass** die Länge eines Säulensegmentes, zwischen 0,5 cm und 50 m, vorzugsweise zwischen 1,0 und 12,5 cm und besonders bevorzugt zwischen 1,5 und 2,5 cm, beträgt.

19. Set nach einem der Ansprüche 14 bis 18, **dadurch gekennzeichnet, dass** das Set zusätzlich Säulensegmente zur Durchführung der Basismessung umfasst, wobei die Anzahl der Basismessungselemente vorzugsweise wenigstens der Anzahl der in dem Set enthaltenen Trennelemente $T_i$ unterschiedlicher stationärer Phasen $S_i$ entspricht.

20. Set nach einem der Ansprüche 14 bis 19, **dadurch gekennzeichnet, dass** das Trennelement ein im Wesentlichen totvolumenfrei gekoppeltes Säulensegment ist.

21. Set nach einem der Ansprüche 14 bis 20, **dadurch gekennzeichnet, dass** am oberen und unteren Ende des Säulensegmentes ein männliches und ein korrespondierendes weibliches Kopplungsmittel vorgesehen sind.

22. Set nach einem der Ansprüche 14 bis 21, **dadurch gekennzeichnet, dass** die Kopplung der Säulensegmente (11) über Halteelemente (20), die die Säulensegmente aufnehmen, erfolgt.

23. Verfahren zur Herstellung einer optimierten Vorrichtung zur Trennung von Substanzgemischen aus einem Set nach einem der Ansprüche 14 bis 22, **dadurch gekennzeichnet,**
**dass** aus den bestimmten Retentionsfaktoren $k_i$ jeder der vorliegenden stationären Phasen $S_i$ ($i \geq 2$) die optimierte Kombination der Selektivitäten und der jeweiligen Dimension des Trennelemente über das Prisma-Modell bestimmt wird und die Trennelemente dann zur optimierten Trennvorrichtung gekoppelt werden.

**Claims**

1. Use of a set of elements in the nano, micro, analytical or preparative field of application for the production of a device for separating substances by distributing between a stationary and a mobile phase, wherein the set includes at least six individual separating elements coupleable together to form a separating device, wherein the separating elements are column segments and each comprise any stationary phase, a carrier element and coupling means and wherein at least two different stationary phases $S_i$ ($i \geq 2$) and of each type of separating element $T_i$ with a defined stationary phase $S_i$, at least three are in each case present in the set, and the set can be used by the user on site to produce the desired separating device by simply coupling the necessary column segments together mechanically.

**2.** Use according to Claim 1, **characterized in that** coupling means (15, 21) that are different from one another are provided at the top and bottom of the column segments so that the bottom end of one column segment can be inserted into a top end of another column segment.

**3.** Use according to Claim 2, **characterized in that** as the end of one column segment is inserted in the start of the other column segment, the inside diameter of the packing cross section is maintained.

**4.** Use according to any one of the preceding claims, **characterized in that** the set comprises separating elements with at least three stationary phases of different selectivities $S_A$, $S_B$ and $S_C$ and of each of these three types of separating elements, at least 3, preferably at least 5, preferably at least 7, and especially preferably 10 or more are contained in the set.

**5.** Use according to any one of the preceding claims, **characterized in that** the stationary phases of the set are selected from the group comprising the saturated or unsaturated alkyl groups (C1, C2, C3, C4, C6, C8, C12, C14, C16, C18, C22, C27, C30), which can be mono-, poly- or acyclic, ali- or heterocyclic, the nitro, cyano, carbonyl, carboxyl, hydroxyl, diol, or thiol groups, glycidoxy groups, optionally etherified, amino or chiral groups, amide groups, carbamates, urea, perfluoralkyl groups or perfluoraryl groups and other haloalkyl and haloaryl groups, polybutadiene groups or other organic polymers, affinity-chromatographic modifications or ion-exchangeable groups (cation exchangers, anion exchangers, zwitterions), unmodified support materials (e.g. silica gel) and molecularly imprinted polymers (MIPs).

**6.** Use according to any one of the preceding claims, **characterized in that** the length of a column segment is between 0.5 cm and 50 m, preferably between 1.0 and 12.5 cm and especially preferably between 1.5 and 2.5 cm.

**7.** Use according to any one of the preceding claims, **characterized in that** the set additionally comprises column segments for carrying out the basis measurement, with the number of basis measurement elements preferably corresponding to at least the number of separating elements $T_i$ of different stationary phases $S_i$ contained in the set.

**8.** Use according to one of the preceding claims in liquid chromatography (column or planar), gas chromatography, chromatography with supercritical gases as mobile phase (SFC) and electrophoretic methods of separation.

**9.** Use according to one of the preceding claims in methods of separation with equilibrated mobile phase and/or isocratic and/or isothermal methods of separation.

**10.** Use according to any one of Claims 1 to 9, **characterized in that** the separating element is a column segment coupled so that it is essentially without any dead space.

**11.** Use according to any one of Claims 1 to 10, **characterized in that** a male and a corresponding female coupling means are provided at the top and bottom of the column segment.

**12.** Use according to any one of Claims 1 to 11, **characterized in that** the coupling of the column segments (11) takes place via holding elements (20), which the column segments receive.

**13.** Use according to any one of Claims 1 to 12, **characterized in that** the optimized combination of the selectivities and of the respective dimension of the separating elements is determined using the prism model from the determined retention factors $k_i$ of each of the stationary phases $S_i$ ($i \geq 2$) that are present, and the separating elements are then coupled to form the optimized separating device.

**14.** Set of elements for the nano, micro, analytical or preparative field of application for the production of a device for separating substances by distributing between a stationary and a mobile phase, wherein the set includes at least six individual separating elements coupleable together to form a separating device, wherein the separating elements are column segments and each comprise any stationary phase, a carrier element and coupling means and wherein at least two different stationary phases $S_i$ ($i \geq 2$) and of each type of separating element $T_i$ with a defined stationary phase $S_i$, at least three are in each case present in the set, **characterized in that** the set comprises multiple segments or elements, the length or dimension of which corresponds to a multiple of the length or dimension of a single separating element.

**15.** Set according to Claim 14, **characterized in that** as the end of one column segment is inserted in the start of the other column segment, the inside diameter of the packing cross section is maintained.

16. Set according to one of Claims 14 or 15, **characterized in that** the set comprises separating elements with at least three stationary phases of different selectivities $S_A$, $S_B$ and $S_C$ and of each of these three types of separating elements, at least 3, preferably at least 5, preferably at least 7, and especially preferably 10 or more are contained in the set.

17. Set according to one of Claims 14 to 16, **characterized in that** the stationary phases of the set are selected from the group comprising the saturated or unsaturated alkyl groups (C1, C2, C3, C4, C6, C8, C12, C14, C16, C18, C22, C27, C30), which can be mono-, poly- or acyclic, ali- or heterocyclic, nitro, cyano, carbonyl, carboxyl, hydroxyl, diol, or thiol groups, glycidoxy groups, optionally etherified, amino or chiral groups, amide groups, carbamates, urea, perfluoralkyl groups or perfluoraryl groups and other haloalkyl and haloaryl groups, polybutadiene groups or other organic polymers, affinity-chromatographic modifications or ion-exchangeable groups (cation exchangers, anion exchangers, zwitterions), unmodified support materials (e.g. silica gel) and molecularly imprinted polymers (MIPs).

18. Set according to one of Claims 14-17, **characterized in that** the length of a column segment is between 0.5 cm and 50 m, preferably between 1.0 and 12.5 cm and especially preferably between 1.5 and 2.5 cm.

19. Set according to one of Claims 14 to 18, **characterized in that** the set additionally comprises column segments for carrying out the basis measurement, with the number of basis measurement elements preferably corresponding to at least the number of separating elements $T_i$ of different stationary phases $S_i$ contained in the set.

20. Set according to any one of Claims 14 to 19, **characterized in that** the separating element is a column segment coupled so that it is essentially without any dead space.

21. Set according to any one of Claims 14 to 20, **characterized in that** a male and a corresponding female coupling means are provided at the top and bottom of the column segment.

22. Set according to any one of Claims 14 to 21, **characterized in that** the coupling of the column segments (11) takes place via holding elements (20), which the column segments receive.

23. Method of production of an optimized device for separating mixtures of substances from a set according to any one of Claims 14 to 22, **characterized in that** the optimized combination of the selectivities and of the respective dimension of the separating elements is determined using the prism model from the determined retention factors $k_i$ of each of the stationary phases $S_i$ ($i \geq 2$) that are present, and the separating elements are then coupled to form the optimized separating device.

**Revendications**

1. Utilisation d'un jeu d'éléments dans les domaines nano, micro, analytique ou préparatif, en vue de la préparation d'un dispositif de séparation de substances par répartition entre une phase stationnaire et une phase mobile, le jeu présentant au moins six éléments de séparation qui peuvent être accouplés les uns aux autres pour former un dispositif de séparation, les éléments de séparation étant des segments de colonne et présentant chacun une phase stationnaire quelconque, un élément de support et des moyens d'accouplement, au moins deux phases stationnaires différentes $S_i$ ($i \geq 2$) étant prévues dans le jeu et au moins trois pièces de type quelconque d'éléments de séparation $T_i$ présentant une phase stationnaire définie $S_i$ étant prévues, l'utilisateur formant sur site avec le jeu le dispositif de séparation souhaité, par simple accouplement mécanique des segments de colonne nécessaires.

2. Utilisation selon la revendication 1, **caractérisée en ce que** des moyens d'accouplement (15, 21) différents les uns des autres sont prévus à l'extrémité supérieure et à l'extrémité inférieure des segments de colonne de telle sorte que l'extrémité inférieure d'un segment de colonne puisse être insérée dans l'extrémité supérieure d'un autre segment de colonne.

3. Procédé selon la revendication 2, **caractérisé en ce que** lorsque l'extrémité d'un segment de colonne est enfoncée dans le début de l'autre segment de colonne, le diamètre intérieur de la section transversale de l'ensemble est conservé.

**4.** Utilisation selon l'une des revendications précédentes, **caractérisée en ce que** le jeu comporte des éléments de séparation qui présentent au moins trois phases stationnaires de sélectivités $S_A$, $S_B$ et $S_C$ différentes et **en ce que** le jeu contient au moins 3, de préférence au moins 5, mieux au moins 7 et de façon particulièrement préférable 10 ou plus de chacun de ces trois types d'éléments de séparation.

**5.** Utilisation selon l'une des revendications précédentes, **caractérisée en ce que** les phases stationnaires du jeu sont sélectionnées dans l'ensemble constitué des groupes alkyle saturés ou insaturés (C1, C2, C3, C4, C6, C8, C12, C14, C16, C18, C22, C27, C30), qui peuvent être monocycliques, polycycliques ou acycliques, alicycliques ou hétérocycliques, des groupes nitro, cyano, carbonyle, carboxyle, hydroxyle, diol ou thiol, des groupes glycidoxy, éventuellement éthérisés, des groupes amino ou des groupes chiraux, des groupes amide, des groupes carbamate, de l'urée, des groupes perfluoroalkyle ou des groupes perfluoroaryle et autres groupes halogénoalkyle ou halogénoaryle, des groupes polybutadiène et d'autres polymères organiques, des variantes de chromatographie par affinité et des groupes capables d'échanger des ions (échangeurs de cations, échangeurs d'anions, ions amphotères), des matériaux de support non modifiés (par exemple le gel de silice) et des polymères à impression moléculaire (MIP - "molecular imprinted polymers").

**6.** Utilisation selon l'une des revendications précédentes, **caractérisée en ce que** la longueur d'un segment de colonne est comprise entre 0,5 cm et 50 m, de préférence entre 1,0 et 12,5 cm et de façon particulièrement préférable entre 1,5 et 2,5 cm.

**7.** Utilisation selon l'une des revendications précédentes, **caractérisée en ce que** le jeu comporte en plus des segments de colonne permettant d'exécuter la mesure de base, le nombre des éléments de mesure de base correspondant de préférence au moins au nombre des éléments de séparation $T_i$ des différentes phases stationnaires $S_i$ que contient le jeu.

**8.** Utilisation selon l'une des revendications précédentes en chromatographie en phase liquide (en colonne ou plane), en chromatographie en phase gazeuse, en chromatographie de gaz hypercritiques comme phase mobile (SFC) et en procédés de séparation par électrophorèse.

**9.** Utilisation selon l'une des revendications précédentes en procédés de séparation à phase mobile équilibrée et/ou en procédés de séparation isocratiques et/ou isothermes.

**10.** Utilisation selon l'une des revendications 1 à 9, **caractérisée en ce que** l'élément de séparation est un segment de colonne accouplé essentiellement sans volume mort.

**11.** Utilisation selon l'une des revendications 1 à 10, **caractérisée en ce qu'**un moyen d'accouplement mâle et un moyen d'accouplement femelle sont prévus respectivement à l'extrémité supérieure et à l'extrémité inférieure du segment de colonne.

**12.** Utilisation selon l'une des revendications 1 à 11, **caractérisée en ce que** l'accouplement des segments de colonne (11) s'effectue par l'intermédiaire d'éléments de maintien (20) qui reprennent les segments de colonne.

**13.** Utilisation selon l'une des revendications 1 à 12, **caractérisée en ce que** la combinaison optimisée des sélectivités et des dimensions particulières de chaque élément de séparation est déterminée par l'intermédiaire du modèle Prisma à partir des facteurs de rétention $k_i$ déterminés pour chacune des phases stationnaires $S_i$ ($I \geq 2$) présentes, les éléments de séparation étant ensuite accouplés pour obtenir un dispositif de séparation optimisé.

**14.** Jeu d'éléments pour les domaines d'utilisation nano, micro, analytique ou préparatif, en vue de la formation d'un dispositif de séparation de substances par répartition entre une phase mobile et une phase stationnaire, le jeu présentant au moins six éléments de séparation distincts pouvant être accouplés les uns aux autres pour former un dispositif de séparation, les éléments de séparation étant des segments de colonne et comportant chacun une phase stationnaire quelconque, un élément de support et un moyen d'accouplement, au moins deux phases stationnaires différentes $S_i$ ($i \geq 2$) et au moins trois pièces de chaque type d'élément de séparation $T_i$ avec une phase stationnaire $S_i$ définie étant prévues dans le jeu, **caractérisé en ce que** le jeu comporte des segments ou éléments multiples dont la longueur ou les dimensions correspondent à un multiple de la longueur ou des dimensions d'un élément de séparation simple.

**15.** Jeu selon la revendication 14, **caractérisé en ce que** lorsque l'extrémité d'un segment de colonne est enfoncé au début de l'autre segment de colonne, le diamètre intérieur de la section transversale de l'ensemble est conservé.

**16.** Jeu selon l'une des revendications 14 ou 15, **caractérisé en ce que** le jeu comporte des éléments de séparation qui présentent au moins trois phases stationnaires de sélectivités $S_A$, $S_B$ et $S_C$ différentes et **en ce que** le jeu comporte au moins 3, de préférence au moins 5, mieux au moins 7 et de manière particulièrement préférable 10 ou plus de chacun de ces trois types d'éléments de séparation $I_n$.

**17.** Jeu selon l'une des revendications 14 à 16, **caractérisé en ce que** les phases stationnaires du jeu sont sélectionnées dans l'ensemble constitué des groupes alkyle saturés ou insaturés (C1, C2, C3, C4, C6, C8, C12, C14, C16, C18, C22, C27, C30), qui peuvent être monocycliques, polycycliques ou acycliques, alicycliques ou hétérocycliques, des groupes nitro, cyano, carbonyle, carboxyle, hydroxyle, diol ou thiol, des groupes glycidoxy, éventuellement éthérisés, des groupes amino ou des groupes chiraux, des groupes amide, des groupes carbamate, de l'urée, des groupes perfluoroalkyle ou des groupes perfluoroaryle et autres groupes halogénoalkyle ou halogénoaryle, des groupes polybutadiène et d'autres polymères organiques, des variantes de chromatographie par affinité et des groupes capables d'échanger des ions (échangeurs de cations, échangeurs d'anions, ions amphotères), des matériaux de support non modifiés (par exemple le gel de silice) et des polymères à impression moléculaire (MIP - "molecular imprinted polymers").

**18.** Jeu selon l'une des revendications 14 à 17, **caractérisé en ce que** la longueur d'un segment de colonne est comprise entre 0,5 cm et 50 m, de préférence entre 1,0 et 12,5 cm et de façon particulièrement préférable entre 1,5 et 2,5 cm.

**19.** Jeu selon l'une des revendications 14 à 18, **caractérisé en ce que** le jeu comporte en plus des segments de colonne permettant d'exécuter la mesure de base, le nombre des éléments de mesure de base correspondant de préférence au moins au nombre des éléments de séparation $T_i$ des différentes phases stationnaires $S_i$ que contient le jeu.

**20.** Jeu selon l'une des revendications 14 à 19, **caractérisé en ce que** l'élément de séparation est un segment de colonne accouplé essentiellement sans volume mort.

**21.** Jeu selon l'une des revendications 14 à 20, **caractérisé en ce qu'**un moyen d'accouplement mâle et un moyen d'accouplement femelle sont prévus respectivement à l'extrémité supérieure et à l'extrémité inférieure du segment de colonne.

**22.** Jeu selon l'une des revendications 14 à 21, **caractérisé en ce que** l'accouplement des segments de colonne (11) s'effectue par l'intermédiaire d'éléments de maintien (20) qui reprennent les segments de colonne.

**23.** Procédé de formation d'un dispositif optimisé de séparation de mélanges de substances à partir d'un jeu selon l'une des revendications 14 à 22,
**caractérisé en ce que**
la combinaison optimisée des sélectivités et des dimensions particulières de chaque élément de séparation est déterminée par l'intermédiaire du modèle Prisma à partir des facteurs de rétention $k_i$ déterminés pour chacune des phases stationnaires $S_i$ ($I \geq 2$) présentes, les éléments de séparation étant ensuite accouplés pour obtenir un dispositif de séparation optimisé.

Fig. 1a

Fig. 1b

# Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030010716 A1
- DE 1130204
- DE 3836343 A1
- JP 09092890 B
- US 2985589 A


**In der Beschreibung aufgeführte Nicht-Patentliteratur**

- **Von G.J. Eppert ; P. Heitmann.** *LC.GC Europe,* Oktober 2003, 2
- **von J. L Glajch et al.** *journal of Chromatography,* 1985, vol. 318, 23
- **von Sz. Nyiredy ; B. Meier ; C. A. J. Erdelmeler ; O. Sticher.** *High Resolution Chromatogr. & Chromatogr. Communications,* 1985, 8
- **Nyiredy, W. Wosniok ; H. Thiele ; O. Sticher.** *Fluid Chromatogr.,* 1991, vol. 14, 3077
- **Nyiredy.** *Chromatographia,* 2000, vol. 51, 288